# EUROPEAN PATENT SPECIFICATION

(11) **EP 3 044 781 B1**
(45) Date of publication and mention of the grant of the patent: **03.04.2019**
(21) Application number: 14757878.5
(22) Date of filing: 20.08.2014
(51) Int. Cl.: G10L 15/22, G06F 17/21, G06F 17/24

(54) **VEHICLE INTERFACE SYSTEM**
FAHRZEUGSCHNITTSTELLENSYSTEM
SYSTÈME D'INTERFACE DE VÉHICULE

(30) Priority: 10.09.2013 GB 201316074
(43) Date of publication of application: 20.07.2016
(73) Proprietor: Jaguar Land Rover Limited, Coventry, Warwickshire CV3 4LF (GB)
(72) Inventor: MITCHELL, Christopher, Coventry Warwickshire CV3 4LF (GB)
(74) Representative: Holmes, Matthew William
(86) International application number: PCT/EP2014/067745
(87) International publication number: WO 2015/036211

(56) References cited:
- EP-A1- 1 879 000
- WO-A1-2004/053836
- WO-A2-2012/161686
- US-A1- 2003 212 961
- US-A1- 2011 060 587
- ANUJ KUMAR ET AL: "Voice typing", PROCEEDINGS OF THE 2012 ACM ANNUAL CONFERENCE ON HUMAN FACTORS IN COMPUTING SYSTEMS, CHI '12, 5 May 2012 (2012-05-05), pages 2277-2285, XP055152257, New York, New York, USA DOI: 10.1145/2207676.2208386 ISBN: 978-1-45-031015-4

## Description

### TECHNICAL FIELD

The present invention relates to a vehicle interface system and particularly, but not exclusively, to a vehicle interface system for performing word processing; a method of operating a vehicle interface system to perform word processing and a vehicle.

### BACKGROUND OF THE INVENTION

It is widely appreciated that people are becoming increasingly connected through technology and the use of messaging interfaces, such as short messaging service (SMS) and email, is increasingly prevalent. However, the problem of distraction arises when a person tries to send a message using a nomadic device whilst performing other tasks, notably driving. The use of such devices whilst driving has been outlawed in several jurisdictions.

The inventor(s) recognise that an interface system which provides text processing functions whilst reducing or minimising the cognitive load on the user would have wide ranging applications, particularly in vehicles.

At least in certain embodiments, the present invention seeks to ameliorate or overcome at least some of the shortcomings associated with known systems.

Document WO2012/161686 discloses a vehicle interface system. The system displays dictated text to the user of the vehicle and the user can edit the text by manual actions or speech commands. Document WO 2004/053836 provides a list of alternatives for a transcribed speech input to the user in case the speech input is not recognized.

### SUMMARY OF THE INVENTION

Aspects of the present invention relate to a vehicle interface system for performing word processing; a method of operating a vehicle interface system to perform word processing; a vehicle; and a computer program product.

According to an aspect of the present invention there is provided a vehicle interface system for performing word processing, the system comprising:
a display for displaying text in the form of words made up of one or more characters, the display comprising a text display location consisting of a fixed number of character entry points;
a processor configured to:
   divide a passage of text into segments comprising one or more words, each segment consisting of a maximum number of characters equal to or less than the fixed number of said character entry points;
   sequentially output each complete segment of said text to the display for display in said text display location, and
   perform editing of the text in the current displayed segment in response to one or more voice commands, wherein said editing of the text comprises:
      if the confidence with which a voice command is identified is above a threshold value, carrying out the correction specified by the voice command; and
      if the confidence with which a voice command is identified is less than the threshold value, displaying a list of possible corrections to the user and allowing the user to pick the correct option.

The vehicle interface system outputs each complete segment of the passage of text to enable a user to check its content and accuracy. The display of restricted sections of the passage of text can help to reduce the time period over which the user looks at the display, thereby reducing potential distractions within the vehicle.

The vehicle interface system can be configured to receive an audio signal from a microphone disposed in the vehicle cabin. The audio signal can convey a voice signal from a user. In use, the voice signal can be generated when the user dictates a message and converted into text data using speech recognition techniques.

The vehicle interface system can comprise a wireless transmitter operative to transmit the voice signal to a remote speech processing station (such as a remote server) for converting the voice signal into text data corresponding to the passage of text. The vehicle interface system can comprise a wireless receiver operative to receive said text data from the remote processor. In use, the text data can be generated remotely at said remote speech processing station and transmitted to the vehicle interface system.

Alternatively, the vehicle interface system can comprise a speech processing module for converting the voice signal into text data corresponding to said passage of text. The text data then forms the text to be output to the display. The speech recognition can be performed directly by the speech processing module on-board the vehicle. The processor could incorporate the speech processing module. Alternatively, the speech processing module could comprise a separate processor.

The vehicle interface system could be configured to provide the text processing functions described herein on text derived from other sources. The passage of text could, for example, be received in a text document, such as an SMS message or an email.

The processor could be arranged to form each complete segment from a fixed number of characters, for example utilising hyphens to split words between segments. Alternatively, the processor can be configured to form each segment from complete words.

The processor can be configured to divide the text into said segments as the text is input. Alternatively, the processor can be configured to divide the text into said segments after the text has been input. For example, a user can dictate a passage which is converted into a block of text which is subsequently divided into said segments.

In systems utilising a remote server to perform speech recognition function, the subdivision of the text into segments could optionally be performed by the remote server. For example, the text could be returned to the vehicle interface system already divided into said segments.

The processor can be configured to output said segments to the display for output to said text display location.

The processor can be configured to perform editing only in respect of the text which is displayed in the text display location. In this arrangement, only the text in the current displayed segment is edited. Thus, a command which can be applied to text contained in multiple segments (for example to select a particular word or phrase used several times in the dictation) is applied only to the segment in the text display location.

The processor can be configured to convert the passage of text to an audio signal for output to a user. The processor can, for example, form a Text-To-Speech (TTS) function to read the converted text to the user. The TTS function could be performed by the remote server and a corresponding electronic signal received by the processor for audio output. The processor can be configured to output the audio signal for the current displayed segment of said text.

The text display location can for example, consist of thirty (30) character entry points.

The processor can be coupled to a wireless transceiver for transmitting the passage of text over a cellular network. For example, the processor can transmit the passage of text as a short messaging service (SMS) text or as an email.

Displaying a list of possible corrections to the user and allowing the user to pick the correct option can comprise allowing the user to pick the correct option via a further voice command.

According to a further aspect of the present invention there is provided a vehicle interface system for performing word processing, the system comprising a processor configured to:
divide a passage of text into a plurality of segments each comprising one or more words, the segments each consisting of a maximum number of characters equal to or less than a fixed number of character entry points in a text display location; and
output a first of said segments to a display for display in said text display locations; and
convert the text in said first segment to an audio signal for audible output,
wherein the processor (5) is configured to edit the text in said first segment based on voice commands from a user, wherein said editing of the text comprises:
   if the confidence with which a voice command is identified is above a threshold value, carrying out the correction specified by the voice command; and
   if the confidence with which a voice command is identified is less than the threshold value, displaying a list of possible corrections to the user and allowing the user to pick the correct option.

The processor can be configured to edit the text in said first segment based on voice commands from a user.

Displaying a list of possible corrections to the user and allowing the user to pick the correct option can comprise allowing the user to pick the correct option via a further voice command.

According to a yet further aspect of the present invention there is provided a vehicle incorporating a vehicle interface system as described herein.

According to a still further aspect of the present invention there is provided a method of operating a vehicle interface system to perform word processing, the method comprising:
dividing a passage of text into segments comprising one or more words, each segment consisting of a maximum number of characters equal to or less than a fixed number of said character entry points in a text display location; and
sequentially outputting each complete segment of said text to a display for display in the text display location
editing the text in a currently displayed segment in response to one or more voice commands from a user, wherein said editing of the text comprises:
   if the confidence with which a voice command is identified is above a threshold value, carrying out the correction specified by the voice command; and
   if the confidence with which a voice command is identified is less than the threshold value, displaying a list of possible corrections to the user and allowing the user to pick the correct option.

The method can comprise generating the passage of text using speech recognition techniques. The passage can be dictated by a user and converted into text. The method can comprise receiving a voice signal corresponding to a dictated passage. The method can comprise transmitting the voice signal to a remote speech processing station (such as a remote server) to convert the voice signal into text data. The text data can be generated remotely at said remote speech processing station and transmitted to the vehicle interface system. The method can comprise receiving the text data at the vehicle interface system.

Displaying a list of possible corrections to the user and allowing the user to pick the correct option can comprise allowing the user to pick the correct option via a further voice command.

The methods described herein can each be computer-implemented, for example on a computational apparatus comprising one or more microprocessors. According to a yet further aspect of the present invention there is provided a computer program product comprising a computer readable storage medium including computer readable program code, where the computer readable program code when executed on a computer causes the computer to perform the method(s) described herein.

The term processor used herein is to be understood as covering both single processors and multiple processors. For example, the processing steps described herein could be performed by a single processor; or could be performed by separate processors.

Within the scope of this application it is expressly envisaged that the various aspects, embodiments, examples and alternatives set out in the preceding paragraphs, in the claims and/or in the following description and drawings, and in particular the individual features thereof, may be taken independently or in any combination. Features described in connection with one embodiment are applicable to all embodiments, unless such features are incompatible.

### BRIEF DESCRIPTION OF THE DRAWINGS

An embodiment of the present invention will now be described, by way of example only, with reference to the accompanying Figures, in which:
Figure 1 shows a schematic representation of a vehicle incorporating a vehicle interface system in accordance with an embodiment of the present invention;
Figure 2 illustrates a display screen of the vehicle interface system in accordance with the present invention shown in figure 1; and
Figures 3A-3D illustrate a series of operations of the vehicle interface system 1 in accordance with the present invention.

### DETAILED DESCRIPTION OF AN EMBODIMENT

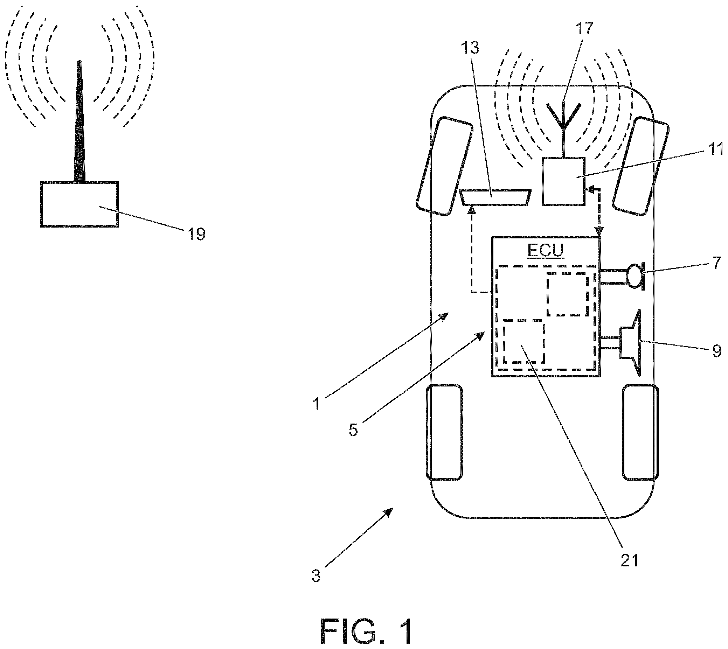

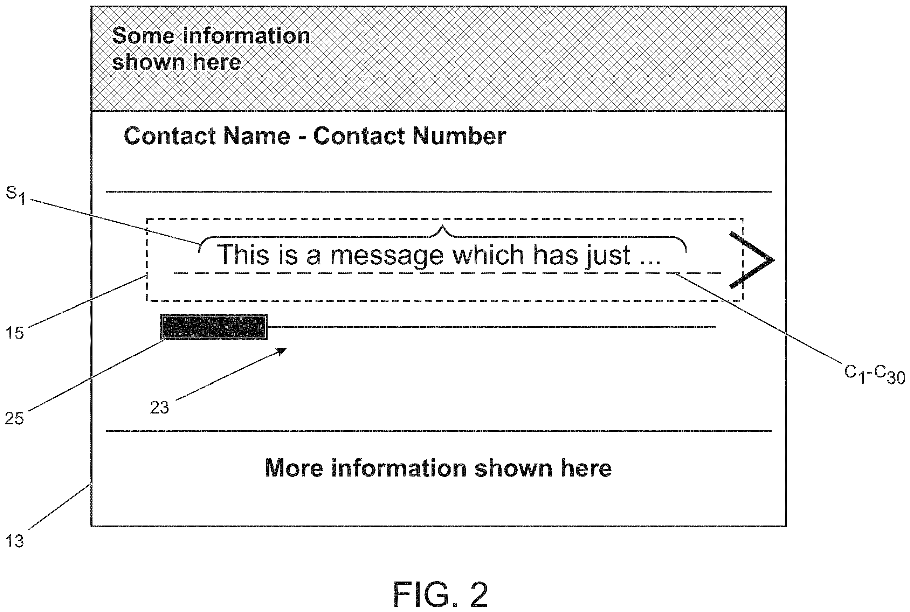

A vehicle interface system 1 for processing text in accordance with an embodiment of the present invention will now be described with reference to Figures 1 and 2. The vehicle interface system 1 is disposed in a vehicle 3 and is operative to enable a user to input, edit and delete text, for example to compose a short messaging service (SMS) text or an email.

The vehicle interface system 1 comprises a processing module 5 coupled to an on-board microphone 7 disposed in a cabin of the vehicle 3 to detect audio signals from within the cabin. The processing module 5 is also coupled to one or more loud speakers 9 disposed in the cabin to output audio signals, for example as part of an on-board audio entertainment system. The processing module 5 is in communication with a wireless transceiver 11 for transmitting and receiving signals over a cellular telecommunications network. As illustrated in Figure 1, the transceiver 11 comprises an antenna 17.

A display screen 13 is provided in a central console (not shown) in the vehicle cabin. The display screen 13 can, for example, be a liquid crystal display (LCD). The display screen 13 can optionally comprise a touch screen for receiving user inputs. The display screen 13 can be operated in a variety of modes, for example to display an image from a parking assist camera or a satellite navigation map. However, the description herein will focus on the operation of the display screen 13 in a text processing mode in accordance with an embodiment of the present invention.

The processing module 5 is connected to the display screen 13 over a wired communications network (not shown), such as a CAN bus, within the vehicle 3. When operating in the aforementioned text processing mode, the display screen 13 is configured to display a text display location 15 in which text to be processed is displayed. The text display location 15 consists of a fixed number of character entry points C in which a character can be displayed. In the present embodiment, the text display location 15 consists of thirty (30) character entry points (C₁-C₃₀), thereby limiting the maximum length of text which can be displayed in the text display location 15 at any time to thirty (30) characters.

Speech recognition software is used to convert a dictated message into text data for output to the display screen 13. The processing module 5 in the present embodiment does not perform the speech recognition procedure. Rather, the processing module 5 communicates with a remote server 19 which is programmed to perform speech recognition. A suitable networked speech recognition system is provided by NUANCE of Massachusetts, 1 Wayside Road, Burlington, MA 01803, USA. The user dictates the message into the on-board microphone 7 and the processing module 5 transmits a voice signal representative of the dictation to the remote server 19 over the cellular telecommunications network. The remote server 19 performs analysis of the voice signal to generate text data corresponding to the message dictated by the user. The text data (comprising words and/or phrases) is then transmitted back to the processing module 5 over the cellular telecommunications network and is stored in a storage device 21. The text data typically forms a passage of text input by the user. The speech recognition can be performed substantially in real time over the network.

The processing module 5 is configured to divide the generated text into segments S₁-Sₙ, each segment S consisting of a maximum number of characters which is less than or equal to the fixed number of character entry points C in the text display location 15. In the present embodiment, the processing module 5 is configured to form each segment from thirty (30) characters rounded down to the nearest complete word. The segments are then output to the text display location 15 for review by the user. The segments are also read out to the user via Text-To-Speech (TTS) and the text displayed on screen changes in segmented chunks to display what is being read out.

A horizontal index 23 is displayed below the text display location 15 to provide a visual indication of the length of the passage of text. A marker 25 is overlaid on the index 23 to provide an indication of the position of the displayed segment within the passage of text.

The user can input voice commands, for example "INSERT", "DELETE", "REPLACE", to edit the text displayed in the text display location 15. The identification of the voice commands could be performed locally (as a smaller vocabulary for instructions can reduce processing overheads).

When a voice command is issued, the vehicle interface system 1 will carry out the action without further prompts if the speech recognition confidence is high. If the confidence is low, a list of possible corrections is shown to the user for them to pick the correct option. By way of example, with reference to Figure 2, if the user stated, 'Replace message' followed by 'passage', provided the recognition confidence is high, the word 'message' would be replaced with the word 'passage' and the sentence would be read out again. If the confidence in recognition of the word 'passage' was below a specified value, a list of candidate words would be shown for selection by the user. When a candidate word is selected from the list, the word would be inserted inline into the displayed segment and the sentence read out again. The introduction of a shorter or longer word into the segment may prompt the processing module 5 to recalculate the segments, for example if the amended segment exceeds 30 characters in length.

In order to implement changes to the remainder of the input text, the user can cycle through the different segments S of text stored in the storage device 21. The segments can each be displayed in full to enable the user to make any required changes. The user can progress forwards (i.e. towards the end of the passage of text) and optionally also backwards (i.e. towards the beginning of the passage of text) through the segments S sequentially.

The user can approve the input text once they are satisfied with the amendments and changes. The vehicle interface system 1 can then insert the completed text into an SMS text or an email in response to user requests.

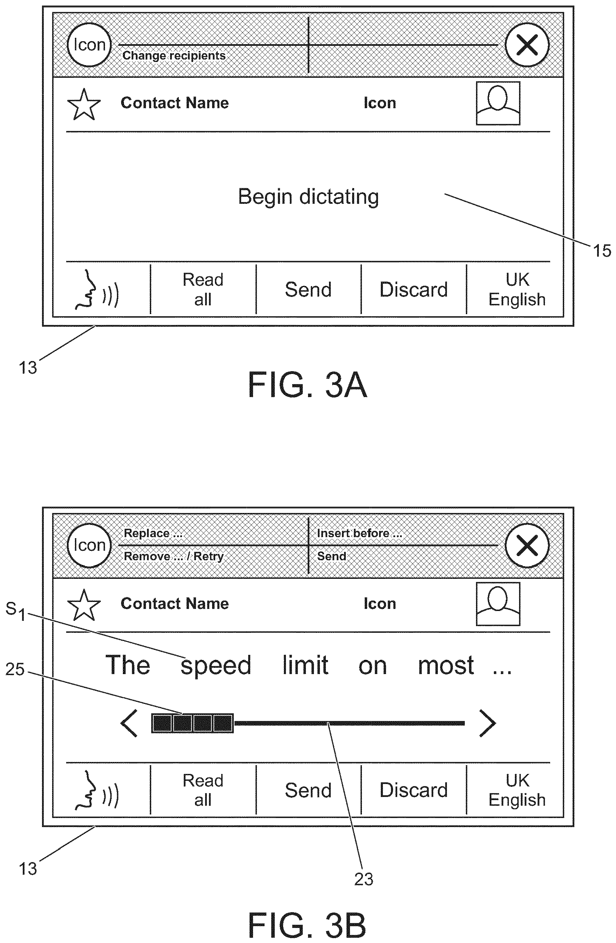

A worked example of a dictation session will now be described with reference to Figures 3A to 3D. A dictation is started by a user issuing an appropriate voice command, such as: "Send a message to <contact>" where <contact> is the name of contact name (which can be inserted automatically from a contacts database). The display screen 13 displays a text input screen comprising the text display location 15, as illustrated in Figure 3A.

The vehicle interface system 1 then prompts the user to begin their dictation. As described herein, the dictated message is converted to a voice signal which is transmitted to the remote server 19 to perform speech recognition. The remote server 19 converts the voice signal to text data which is returned to the processing module 5 and stored in the storage device 21. In the present example, the user has dictated: "The speed limit on most motorways in Great Britain is seventy miles per hour period".

The converted text is divided into segments S of up to 30 characters, rounded down to the nearest word by the processing module 5. If the converted text is longer than 30 characters, the text is divided across multiple segments. In the present example, the dictated text is divided into three (3) segments: (S₁) "The speed limit on most"; (S₂) "motorways in Great Britain is"; (S₃) "seventy miles per hour period". The segments S₁-S₃ making up the longer message are each displayed in sequence in the text displayed location 15, as illustrated in Figure 3B. The segment shown on the display will be read out using TTS and, when complete, the next segment will be shown and the TTS will continue without an audible gap.

If at any point the user interacts with the system in a way that is relevant to the dictation session, the TTS will pause and act on the interaction. If the interaction is a further dictation, this will be added to the end of the previously entered dictation and the TTS will resume from the start of the newly added dictation utterance.

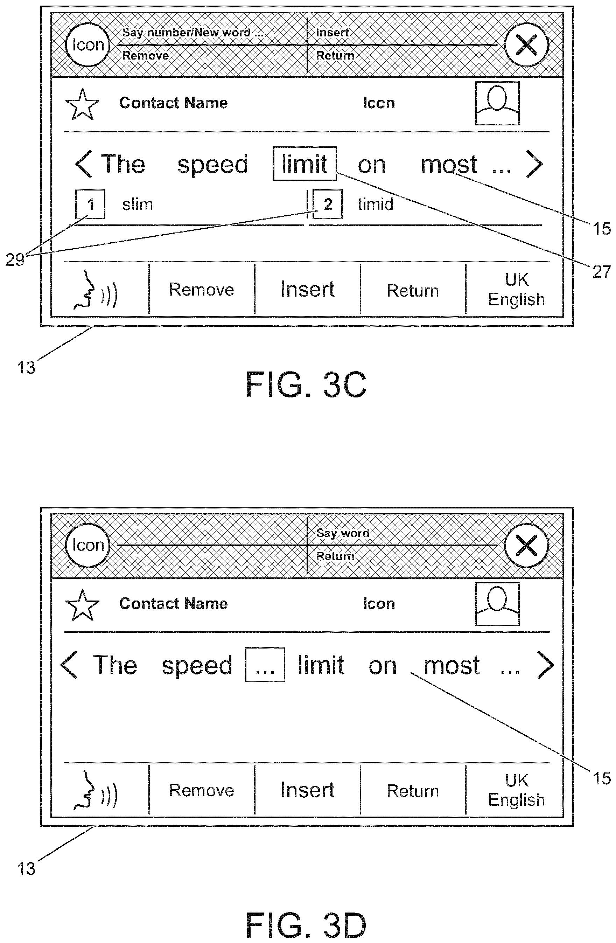

As outlined above, the vehicle interaction system 1 allows the user to issue voice commands to perform a text processing functions. If the user wants to replace, insert or remove a word from the displayed segment, these actions can be performed via voice commands. To replace a word shown in the displayed segment, the user can issue the voice command "Replace <word>". In the present example, the user issues the voice command "Replace limit" and the word "limit" is selected for replacement, as illustrated in Figure 3C.

The vehicle interface system 1 provides a visual indication that the word 'limit' has been selected. In the present embodiment, a box 27 is overlaid on the text display location 15 to indicate the selected word. The words 'slim' and 'timid' are possible alternatives returned by the recognition engine and these are displayed in a first selection list 29 below the text display location 15. The user can select one of the candidate words by stating the corresponding number, for example "Select <1>" would select the replacement word "slim" in the present case. Rather than issue a voice command, the user could select the replacement word by contacting a touchscreen or other input means (such as a switch, a button or a jog wheel). The selected word is then introduced into the dictation passage to replace the original word 'limit' and the message is read out via TTS. If the entire message has previously been read out, then only the displayed segment will be read, otherwise the whole message will be read, starting from the segment displayed.

A similar method is used to insert words using the command: "Insert before <word>". In the present example, issuing the voice command "Insert before limit" would result in the screen shown in Figure 3D. From here, a new word can be dictated and will be inserted in to the segment. If the confidence for either the replacing word or the inserting word is high enough, these words will be entered directly into the dictation. If the confidence is too low, the words and any alternatives will be displayed on a list similar to that in Figure 3C for the user to select by speech (or other input means).

To remove a word from the displayed segment the user can use the voice command: "Remove <word>". This will remove the word from the segment and the TTS will follow the same rules as those described above in respect of Figure 3C.

Under some circumstances a word that the user says as part of a voice command intended to edit the segment of text will appear more than once in the text. This causes uncertainty regarding the part of the text that the user wishes to edit, even if the system 1 determines a high recognition confidence for the word itself. To resolve this uncertainty the system may display a user-selectable option for each instance of the word, differentiating the individual instances from each other by including some of the text that immediately precedes or follows the word in each instance. Each user-selectable option may be numbered, so that the user may select the correct instance using a further voice command specifying the number of the instance that corresponds to the part of the text the user wishes to edit. Alternatively the user may select the required instance by other means, for example by contacting a touchscreen or other input means (such as a switch, a button or a jog wheel). Once the user has selected the desired instance the system performs the operation required by the original voice command on the selected instance of the word. Optionally, if the system determines a low recognition confidence for the word itself then further options corresponding to alternative words may also be displayed.

It should be noted that the probability of multiple instances of the same word occurring in a single displayed segment is reduced by selecting a relatively small maximum number of characters, for example thirty (30), for each segment.
At any point after the initial dictation the user can use the voice command "Retry" or "Send". The voice command "Send" will send the message to the selected contact or contacts. The voice command "Retry" will remove the latest dictation and display either the screen shown in Figure 3A if there are no previous dictations available or the last segment of the previous dictation entry if previous dictations are available.

At least in certain embodiments, the vehicle interface system 1 enables the input of a message by audio dictation coupled with audio feedback via the loud speakers 9. The display screen 13 provides limited visual feedback for the user via the text display location 15, thereby helping to reduce distraction as the message is input. Moreover, the audio dictation input and voice commands offer hands-free operation of the system so that a driver does not have to take their hands off the wheel whilst inputting a message.

It will be appreciated that various changes and modifications can be made to the vehicle interface system 1 described herein without departing from the scope of the present invention.

## Claims

1. A vehicle interface system (1) comprising:
a display (13) for displaying text in the form of words made up of one or more characters, the display (13) comprising a text display location (15) consisting of a fixed number of character entry points; and
a processor (5) configured to:
divide a passage of text into segments comprising one or more words after the text has been input, each segment consisting of a maximum number of characters equal to or less than the fixed number of said character entry points;
sequentially output each complete segment of said text to the display (13) for display in said text display location (15), and
perform editing of the text in the current displayed segment in response to one or more voice commands, wherein said editing of the text comprises:
if the confidence with which a voice command is identified is above a threshold value, carrying out the correction specified by the voice command; and
if the confidence with which a voice command is identified is less than the threshold value, displaying a list of possible corrections to the user and allowing the user to pick the correct option.

2. A vehicle interface system (1) as claimed in claim 1 comprising a wireless transmitter operative to transmit a voice signal to a remote speech processing station for conversion into text data corresponding to said passage of text; and a wireless transceiver (11) operative to receive said text data from the remote processor.

3. A vehicle interface system (1) as claimed in claim 1 comprising a speech processing module for converting a voice signal into text data corresponding to said passage of text.

4. A vehicle interface system (1) as claimed in any one of claims 1, 2 or 3, wherein said processor (5) is configured to form each segment from complete words.

5. A vehicle interface system (1) as claimed in any one of the preceding claims, wherein the processor (5) is configured to convert the passage of text to an audio signal for output to a user.

6. A vehicle interface system (1) as claimed in claim 5, wherein the processor (5) is configured to output said audio signal for the current displayed segment of said passage of text.

7. A vehicle interface system (1) as claimed in any one of the preceding claims, wherein the text display location (15) consists of thirty character entry points.

8. A vehicle interface system (1) as claimed in any one of the preceding claims, wherein the processor (5) is coupled to a wireless transceiver (11) for transmitting the passage of text over a cellular network.

9. A vehicle interface system as claimed in any preceding claim, wherein displaying a list of possible corrections to the user and allowing the user to pick the correct option comprises allowing the user to pick the correct option via a further voice command.

10. A vehicle interface system (1) for performing word processing, the system comprising a processor (5) configured to:
divide a passage of text into a plurality of segments each comprising one or more words, the segments each consisting of a maximum number of characters equal to or less than a fixed number of character entry points in a text display location (15); and
output a first of said segments to a display (13) for display in said text display locations (15); and
convert the text in said first segment to an audio signal for audible output,
wherein the processor (5) is configured to edit the text in said first segment based on voice commands from a user, wherein said editing of the text comprises:
if the confidence with which a voice command is identified is above a threshold value, carrying out the correction specified by the voice command; and
if the confidence with which a voice command is identified is less than the threshold value, displaying a list of possible corrections to the user and allowing the user to pick the correct option.

11. A vehicle interface system as claimed in claim 10, wherein displaying a list of possible corrections to the user and allowing the user to pick the correct option comprises allowing the user to pick the correct option via a further voice command.

12. A vehicle (3) incorporating a vehicle interface system as claimed in any one of the preceding claims.

13. A method of operating a vehicle interface system (1) to perform word processing, the method comprising:
dividing a passage of text into segments comprising one or more words after the text has been input, each segment consisting of a maximum number of characters equal to or less than a fixed number of said character entry points in a text display location (15);
sequentially outputting each complete segment of said text to a display for display in the text display location (15); and
editing the text in a currently displayed segment in response to one or more voice commands from a user, wherein said editing of the text comprises:
if the confidence with which a voice command is identified is above a threshold value, carrying out the correction specified by the voice command; and
if the confidence with which a voice command is identified is less than the threshold value, displaying a list of possible corrections to the user and allowing the user to pick the correct option.

14. A method as claimed in claim 13, wherein displaying a list of possible corrections to the user and allowing the user to pick the correct option comprises allowing the user to pick the correct option via a further voice command.

## Patentansprüche

1. Fahrzeugschnittstellensystem (1), Folgendes umfassend:
eine Anzeige (13) zum Anzeigen von Text in der Form von Wörtern, die aus einem oder mehreren Zeichen bestehen, wobei die Anzeige (13) eine Textanzeigestelle (15) umfasst, die aus einer festen Anzahl von Zeicheneintrittspunkten besteht; und
einen Prozessor (5), der zu Folgendem konfiguriert ist:
Unterteilen einer Textpassage in Segmente, die ein oder mehrere Wörter umfassen, nachdem der Text eingegeben wurde, wobei jedes Segment aus einer maximalen Anzahl von Zeichen besteht, die höchstens der festen Anzahl der Zeicheneintrittspunkte entspricht;
sequentielles Ausgeben jedes vollständigen Segments des Textes an die Anzeige (13) zum Anzeigen an der Textanzeigestelle (15) und
Durchführen des Editierens des Textes in dem aktuellen angezeigten Segment als Reaktion auf einen oder mehrere Sprachbefehle, wobei das Editieren des Textes Folgendes umfasst:
wenn das Vertrauen, mit dem ein Sprachbefehl identifiziert wird, über einem Schwellenwert liegt, Ausführen der durch den Sprachbefehl spezifizierten Korrektur; und
wenn das Vertrauen, mit dem ein Sprachbefehl identifiziert wird, unter dem Schwellenwert liegt, Anzeigen einer Liste von möglichen Korrekturen für den Benutzer und Ermöglichen, dass der Benutzer die korrekte Option wählt.

2. Fahrzeugschnittstellensystem (1) nach Anspruch 1, umfassend einen drahtlosen Sender, der betriebsfähig ist, um ein Sprachsignal an eine entfernte Sprachverarbeitungsstation für die Umwandlung in Textdaten zu übertragen, die der Textpassage entsprechen; und einen drahtlosen Transceiver (11), der betriebsfähig ist, um die Textdaten von dem entfernten Prozessor zu empfangen.

3. Fahrzeugschnittstellensystem (1) nach Anspruch 1, umfassend ein Sprachverarbeitungsmodul zum Umwandeln eines Sprachsignals in Textdaten, die der Textpassage entsprechen.

4. Fahrzeugschnittstellensystem (1) nach einem der Ansprüche 1, 2 oder 3, wobei der Prozessor (5) konfiguriert ist, um jedes Segment aus vollständigen Wörtern auszubilden.

5. Fahrzeugschnittstellensystem (1) nach einem der vorhergehenden Ansprüche, wobei der Prozessor (5) konfiguriert ist, um die Textpassage in ein Audiosignal für die Ausgabe an einen Benutzer umzuwandeln.

6. Fahrzeugschnittstellensystem (1) nach Anspruch 5, wobei der Prozessor (5) konfiguriert ist, um das Audiosignal für das aktuelle angezeigte Segment der Textpassage auszugeben.

7. Fahrzeugschnittstellensystem (1) nach einem der vorhergehenden Ansprüche, wobei die Textanzeigestelle (15) aus dreißig Zeicheneintrittspunkten besteht.

8. Fahrzeugschnittstellensystem (1) nach einem der vorhergehenden Ansprüche, wobei der Prozessor (5) mit einem drahtlosen Transceiver (11) für das Übertragen der Textpassage über ein Mobilfunknetz gekoppelt ist.

9. Fahrzeugschnittstellensystem nach einem der vorhergehenden Ansprüche, wobei das Anzeigen einer Liste von möglichen Korrekturen für den Benutzer und das Ermöglichen des Benutzers, die korrekte Option zu wählen, das Ermöglichen des Benutzers umfasst, die korrekte Option über einen weiteren Sprachbefehl zu wählen.

10. Fahrzeugschnittstellensystem (1) zum Durchführen von Wortverarbeitung, wobei das System einen Prozessor (5) umfasst, der zu Folgendem konfiguriert ist:
Unterteilen einer Textpassage in mehrere Segmente, die jeweils ein oder mehrere Wörter umfassen, wobei die Segmente jeweils aus einer maximalen Anzahl von Zeichen bestehen, die höchstens einer festen Anzahl von Zeicheneintrittspunkten an einer Textanzeigestelle (15) entspricht; und
Ausgeben eines ersten der Segmente an eine Anzeige (13) zur Anzeige an den Textanzeigestellen (15); und
Umwandeln des Textes in dem ersten Segment in ein Audiosignal zur hörbaren Ausgabe, wobei der Prozessor (5) konfiguriert ist, den Text in dem ersten Segment basierend auf Sprachbefehlen von einem Benutzer zu editieren, wobei das Editieren des Textes Folgendes umfasst:
wenn das Vertrauen, mit dem ein Sprachbefehl identifiziert wird, über einem Schwellenwert liegt, Ausführen der durch den Sprachbefehl spezifizierten Korrektur; und
wenn das Vertrauen, mit dem ein Sprachbefehl identifiziert wird, unter dem Schwellenwert liegt, Anzeigen einer Liste von möglichen Korrekturen dem Benutzer und Ermöglichen, dass der Benutzer die korrekte Option wählt.

11. Fahrzeugschnittstellensystem nach Anspruch 10, wobei das Anzeigen einer Liste von möglichen Korrekturen für den Benutzer und das Ermöglichen des Benutzers, die korrekte Option zu wählen, das Ermöglichen des Benutzers umfasst, die korrekte Option über einen weiteren Sprachbefehl zu wählen.

12. Fahrzeug (3), das ein Fahrzeugschnittstellensystem nach einem der vorhergehenden Ansprüche einschließt.

13. Verfahren zum Betreiben eines Fahrzeugschnittstellensystems (1) zum Durchführen von Wortverarbeitung, wobei das Verfahren Folgendes umfasst:
Unterteilen einer Textpassage in Segmente, die ein oder mehrere Wörter umfassen, nachdem der Text eingegeben wurde, wobei jedes Segment aus einer maximalen Anzahl von Zeichen besteht, die höchstens einer festen Anzahl der Zeicheneintrittspunkte an einer Textanzeigestelle (15) entspricht;
sequentielles Ausgeben jedes vollständigen Segments des Textes an eine Anzeige zur Anzeige an der Textanzeigestelle (15); und
Editieren des Textes in einem aktuell angezeigten Segment als Reaktion auf einen oder mehrere Sprachbefehle von einem Benutzer, wobei das Editieren des Textes Folgendes umfasst:
wenn das Vertrauen, mit dem ein Sprachbefehl identifiziert wird, über einem Schwellenwert liegt, Ausführen der durch den Sprachbefehl spezifizierten Korrektur; und
wenn das Vertrauen, mit dem ein Sprachbefehl identifiziert wird, unter dem Schwellenwert liegt, Anzeigen einer Liste von möglichen Korrekturen für den Benutzer und Ermöglichen, dass der Benutzer die korrekte Option wählt.

14. Verfahren nach Anspruch 13, wobei das Anzeigen einer Liste von möglichen Korrekturen für den Benutzer und das Ermöglichen des Benutzers, die korrekte Option zu wählen, das Ermöglichen des Benutzers umfasst, die korrekte Option über einen weiteren Sprachbefehl zu wählen.

## Revendications

1. Système d'interface de véhicule (1) comprenant :
un affichage (13) pour afficher du texte sous la forme de mots composés d'un ou de plusieurs caractères, l'affichage (13) comprenant un emplacement d'affichage de texte (15) consistant en un nombre fixe de points d'entrée de caractère ; et
un processeur (5) configuré pour :
diviser un passage de texte en segments comprenant un ou plusieurs mots après la saisie du texte, chaque segment étant constitué d'un nombre maximal de caractères égal ou inférieur au nombre fixe desdits points d'entrée de caractère ;
émettre séquentiellement chaque segment complet dudit texte sur l'afficheur (13) pour son affichage dans ledit emplacement d'affichage de texte (15), et
réaliser l'édition du texte dans le segment actuel affiché en réponse à une ou à plusieurs commandes vocales, ladite édition du texte comprenant :
si la confiance avec laquelle une commande vocale est identifiée est supérieure à une valeur seuil, l'exécution de la correction spécifiée par la commande vocale ; et
si la confiance avec laquelle une commande vocale est identifiée est inférieure à la valeur seuil, l'affichage d'une liste de corrections possibles à l'attention de l'utilisateur et le fait de permettre à l'utilisateur de choisir l'option correcte.

2. Système d'interface de véhicule (1) selon la revendication 1, comprenant un émetteur sans fil capable de transmettre un signal vocal à une station de traitement de la parole à distance pour une conversion en données de texte correspondant audit passage de texte ; et un émetteur-récepteur sans fil (11) capable de recevoir lesdites données de texte du processeur à distance.

3. Système d'interface de véhicule (1) selon la revendication 1, comprenant un module de traitement de la parole pour convertir un signal vocal en données de texte correspondant audit passage de texte.

4. Système d'interface de véhicule (1) selon l'une quelconque des revendications 1, 2 ou 3, dans lequel ledit processeur (5) est configuré pour former chaque segment à partir de mots complets.

5. Système d'interface de véhicule (1) selon l'une quelconque des revendications précédentes, dans lequel le processeur (5) est configuré pour convertir le passage de texte en un signal audio pour une émission à l'attention d'un utilisateur.

6. Système d'interface de véhicule (1) selon la revendication 5, dans lequel le processeur (5) est configuré pour émettre ledit signal audio pour le segment actuel affiché dudit passage de texte.

7. Système d'interface de véhicule (1) selon l'une quelconque des revendications précédentes, dans lequel l'emplacement d'affichage de texte (15) est constitué de trente points d'entrée de caractère.

8. Système d'interface de véhicule (1) selon l'une quelconque des revendications précédentes, dans lequel le processeur (5) est couplé à un émetteur-récepteur sans fil (11) pour transmettre le passage de texte par un réseau cellulaire.

9. Système d'interface de véhicule selon une quelconque revendication précédente, dans lequel l'affichage d'une liste de corrections possibles à l'attention de l'utilisateur et le fait de permettre à l'utilisateur de choisir l'option correcte comprend le fait de permettre à l'utilisateur de choisir l'option correcte par l'intermédiaire d'une autre commande vocale.

10. Système d'interface de véhicule (1) pour effectuer un traitement de texte, le système comprenant un processeur (5) configuré pour :
diviser un passage de texte en une pluralité de segments comprenant chacun un ou plusieurs mots, les segments étant chacun constitués d'un nombre maximal de caractères égal ou inférieur à un nombre fixe de points d'entrée de caractère dans un emplacement d'affichage de texte (15) ; et
émettre un premier desdits segments sur un affichage (13) pour un affichage dans lesdits emplacements d'affichage de texte (15) ; et
convertir le texte dans ledit premier segment en un signal audio pour une émission audible,
le processeur (5) étant configuré pour éditer le texte dans ledit premier segment sur la base de commandes vocales émanant d'un utilisateur, ladite édition du texte comprenant :
si la confiance avec laquelle une commande vocale est identifiée est supérieure à une valeur seuil, l'exécution de la correction spécifiée par la commande vocale ; et
si la confiance avec laquelle une commande vocale est identifiée est inférieure à la valeur seuil, l'affichage d'une liste de corrections possibles à l'attention de l'utilisateur et le fait de permettre à l'utilisateur de choisir l'option correcte.

11. Système d'interface de véhicule selon la revendication 10, dans lequel l'affichage d'une liste de corrections possibles à l'attention de l'utilisateur et le fait de permettre à l'utilisateur de choisir l'option correcte comprend le fait de permettre à l'utilisateur de choisir l'option correcte par l'intermédiaire d'une autre commande vocale.

12. Véhicule (3) incorporant un système d'interface de véhicule selon l'une quelconque des revendications précédentes.

13. Procédé de fonctionnement d'un système d'interface de véhicule (1) pour effectuer un traitement de texte, le procédé comprenant :
la division d'un passage de texte en segments comprenant un ou plusieurs mots après la saisie du texte, chaque segment étant constitué d'un nombre maximal de caractères égal ou inférieur à un nombre fixe desdits points d'entrée de caractère dans un emplacement d'affichage de texte (15) ;
l'émission séquentielle de chaque segment complet dudit texte sur un affichage pour un affichage dans l'emplacement d'affichage de texte (15) ; et
l'édition du texte dans un segment actuellement affiché en réponse à une ou à plusieurs commandes vocales émanant d'un utilisateur, ladite édition du texte comprenant :
si la confiance avec laquelle une commande vocale est identifiée est supérieure à une valeur seuil, l'exécution de la correction spécifiée par la commande vocale ; et
si la confiance avec laquelle une commande vocale est identifiée est inférieure à la valeur seuil, l'affichage d'une liste de corrections possibles à l'attention de l'utilisateur et le fait de permettre à l'utilisateur de choisir l'option correcte.

14. Procédé selon la revendication 13, dans lequel l'affichage d'une liste de corrections possibles à l'attention de l'utilisateur et le fait de permettre à l'utilisateur de choisir l'option correcte comprend le fait de permettre à l'utilisateur de choisir l'option correcte par l'intermédiaire d'une autre commande vocale.
